(19) Europäisches Patentamt
European Patent Office
Office européen des brevets

(11) Publication number: **0 316 369 B1**

(12) **EUROPEAN PATENT SPECIFICATION**

(45) Date of publication of patent specification: **24.03.93**

(51) Int. Cl.[5]: **C08F 30/08**, C08F 210/00, C08F 8/12

(21) Application number: **88900936.1**

(22) Date of filing: **28.12.87**

(86) International application number: **PCT/US87/03454**

(87) International publication number: **WO 88/08856 (17.11.88 88/25)**

(54) **INCORPORATION OF FUNCTIONAL GROUPS IN POLYMERS.**

(30) Priority: **08.05.87 US 47960**

(43) Date of publication of application: **24.05.89 Bulletin 89/21**

(45) Publication of the grant of the patent: **24.03.93 Bulletin 93/12**

(84) Designated Contracting States: **AT BE CH DE FR GB IT LI LU NL**

(56) References cited:
**FR-A- 1 433 342**
**FR-A- 2 073 600**
**GB-A- 1 415 194**
**GB-A- 1 456 865**
**US-A- 4 535 138**

(73) Proprietor: **Aristech Chemical Corporation**
**600 Grant Street**
**Pittsburgh, PA 15230-0250(US)**

(72) Inventor: **SIVAK, Andrew, J.**
**132 Hawthorne Street**
**Edgewood, PA 15218(US)**
Inventor: **CULLO, Leonard, A.**
**315 Maple Drive, Maplewood**
**Greensburg, PA 15601(US)**

(74) Representative: **Patentanwälte Grünecker, Kinkeldey, Stockmair & Partner**
**Maximilianstrasse 58**
**W-8000 München 22 (DE)**

**EP 0 316 369 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of making stereoregular polymers in Ziegler-Natta systems wherein the manufactured polymers contain active groups, for example, the manufacture of polyolefins such as polyproplyene which may be colored or dyed by color-imparting agents chemically bonded directly to the backbone of the polymer, and to the polymers obtained with such a method.

Prior to the present invention, a practical, efficient method of integrally dyeing polypropylene and certain other polymers has eluded researchers in the art.

Generally, herein the term "dyeable polymers" such as dyeable polypropylene, means polymers receptive to the chemical addition or substitution of modifying groups other than dyes, as will become apparent to those skilled in the art. The fast dyeing of fabrics has long been accomplished through reliance on polar functionalities which are present in the fibers; the dyes are typically designed to react with the polar groups. Polypropylene, however, whether in the form of synthetic fiber or other more substantial three-dimensional form, must be colored through methods such as physical mixing of colorant or through a relatively expensive and frequently ineffective method of treatment. Pure polypropylene has no reactive groups at all, and of course no polar groups. Attempts to incorporate a monomer having reactive groups such as polar groups into the backbone of polypropylene by copolymerization have been failures. Typically such a monomer will not survive contact with the commonly used Ziegler-Natta catalyst.

By integral dyeing a dyeing technique which employs "dyesites" as that term is used, for example, in U. S. Patent 3,533,731 is meant. In this patent to Schmidl and Jennings, the dyesites are nitrogen-containing and are introduced by way of the monomer N,N-diisopropyl-7-octenylamine. The patent also recites the use of vinyl pyridine to provide nitrogen reactive sites for dyes. Such copolymers of propylene have not found widespread use because the reactivity of the functional nitrogen group makes it too vulnerable to unwanted reactions during the polymerization phase, i.e. in the presence of polymerization catalysts.

More broadly, it may be stated that prior to the present invention a practical method of employing Ziegler-Natta catalysts for the polymerization of monomers containing functional groups has not been developed.

Silicon-containing polymers have been produced by hydrosilation of the unsaturated groups in polybutadiene -- see U. S. Patent 4,230,815. Small amounts of various polymerizable hydrolyzable silanes are employed in U. S. Patent 4,481,322 as part of a filler including various di-unsaturated monomers.

A number of polymerizable silicone esters and silane monomers are disclosed in U. S. Patent 4,454,295, and copolymerized with various acrylates and cellulose esters to make a material for use in manufacturing contact lenses. See also U. S. Patents 3,504,998 and 3,709,656 which also employ various silicon-containing monomers.

A silane compound represented by the formula $RSiR'_nY_{3-n}$ wherein R is a member selected from the group consisting of ethylenically unsaturated hydrocarbyl and hydrocarbyloxy groups, R' is an aliphatic saturated hydrocarbyl group, Y is a hydrolyzable organic group, and n is zero, 1, or 2 is employed as a co-monomer with ethylene and made to crosslink through the use of water in the presence of a catalyst to promote condensation linkages, in U. S. Patent 4,297,310. Certain cyclic compounds are polymerized in U. S. Patent 3,920,714 to produce polymers with silyl side groups, and certain polyenes containing silyl groups are shown in U. S. Patent 4,028,483. Alpha-unsaturated compounds containing silyl-protected oxygen have been shown in the prior art; however they are not used for polymerization. See "Reaction of trialkyl (aryl) silanes with unsaturated $\alpha$-oxides", I. E. Sharikova and V. M. Al'bitskaya, Izv. Vyssh. Ucheb. Zaved., Khim. Khim. Tekhnol., 9(4), 595-599 (1966), In Russian; contains reference to $H_2C=CH\text{-}CH_2\text{-}CH_2\text{-}O\text{-}SiEt_3$. The reaction parameters cited (boiling point = 76-7°C at 11 mm Hg, density = 0.826 g/ml) agree with the present specification. The compound was prepared from reaction of the $\alpha$-oxide of 1,3-butadiene and triethylsilane, in isopropanol in the presence of chloroplatinic acid ($H_2PtCl_6$). No use of material was cited in the abstract. See "Reaction of triethylsilane with unsaturated alcohols", E. Lukevics and M. G. Voronkov, Khim. Geterotsikl. Soedin., Akad. Nauk Latv. SSR, 1965(2), 179-86, In Russian. Primary alcohols (like allyl alcohol) react with triethylsilane in the presence of $H_2PtCl_6$ to form triethylsilyl enol ethers (like $H_2C=CH\text{-}CH_2\text{-}O\text{-}SiEt_3$) with evolution of hydrogen. Secondary ethylenic alcohols (eg. 1-buten-3-ol =

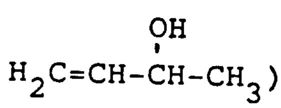

react to give the silyl ether

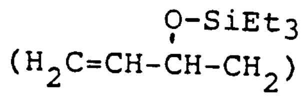

and products of addition across the double bond [hydrosilation]

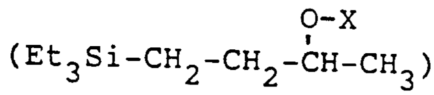

and

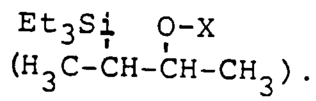

No uses cited in the abstract. See "Allyloxy carbanions. New synthesis of aldehydes via a $\beta$-acyl carbanion equivalent", W. Clark Still and T. L. Macdonald, J. Am. Chem. Soc. 1974, 96(17), 5561-3. $H_2C=CH\ CH_2OSiEt_3$ is used to synthesize $\beta$-alkylated aldehydes. See "Allyloxycarbanions. A synthesis of 3,4-dihydroxy-1-olefins from carbonyl compounds", W. Clark Still and T. L. Macdonald, J. Org. Chem. 1976, 41-(22), 3620-2. $H_2C=CHCH_2OSiR_3$ (R = Me, Et) gave stable allyl lithium reagents. See "Conversion of monoalkyl olefins to 1,1-dialkyl olefins by reaction with bis(cyclopentadienyl)titanium dichloride-trialkylaluminum", James J. Barber, Carl Willis, and George M. Whitesides, J. Org. Chem., 1979, 44(20), 3603-4. Synthesis of (5-hexenyloxy) trimethyl silane which is $H_2C=CH-(CH_2)_4-OSiMe_3$.

The following U.S. patents disclose various methods of making dyeable polypropylene, none of which is similar to the present method: 3,419, 638, 3,779,703, and 3,131,990.

Special interest may be directed to U.S. Patents 3,655,633, 3,857,825, 3,929,850, and 3,920,715 which disclose polymers having silyl end groups. In addition, it should be observed that the compounds O-trimethylsilylallyl alcohol $(CH_3)_3Si-OCH_2CH=CH_2$ and N-trimethylsilylallylamine are known compounds offered for experimentation by Petrarch systems of Bristol, Pennsylvania. The compound 2-[(trimethylsilyl)-oxy] ethyl methacrylate has been polymerized by Hirao, Kato, Yamaguchi and Nakahama as reported in Macromolecules 1986, 19, 1294-1299. The polymerization of certain monomers protected with silyl groups, specifically 4-vinyl phenol, 2-(4 vinylphenyl) ethanol, and 4-vinylaniline, are reported in the same article; however, none of the polymerizations is with a Ziegler-Natta catalyst. A series of hydrogenalkenyloxysilanes is reported in U.S. Patent 4,294,975.

EP-A-263632 and EP-A-277721 being state of the art in accordance with Article 54(3) EPC both disclose p-vinylphenol polymers made by hydrolysis of 4-acetoxystyrene, however, no use is made of a silyl-containing monomer polymerizable in the presence of a Ziegler-Natta catalyst to a stereoregular polymer.

FR-A-1433342 describes a vinyloxysilane monomer polymerizable in the presence of a Ziegler-Natta catalyst to a polymer. No particular stereoregularity, however, is reported for this polymer.

The present invention relates to a method of making a stereoregular polymer comprising polymerizing, in the presence of a Ziegler-Natta catalyst, monomers including at least one $\alpha$-olefin and a silyl-containing monomer of the general formula (I):

$$[CH_2=CH(CH_2)_a]_y(X)(0_{4-w}SiR_w)_z \qquad (I)$$

wherein each a is independently either 0 or 1, y is an integer from 1 to 4, X is an alkyl, aryl or alkaryl group having from 1 to 50 carbon atoms, z is an integer from 1 to 6, each R is independently selected from alkyl, oxyalkyl, alkaryl, aryl, alicyclic and aryloxy groups having from 1 to 20 carbon atoms, and w is an integer from 1 to 3, and the balance of the monomer is selected from $\alpha$-olefins.

When z is 1 and y is 1, and where X is an alkyl group, X may be expressed as $(C_mH_{2m})$ where m is an integer from 1 to 50, preferably 1 to 20.

In another aspect the present invention also relates to a stereoregular polymer obtainable by the method according to the present invention including as a monomer a compound of the general formula (I)

$$[CH_2=CH(CH_2)_a]_y(X)(O_{4-w}SiR_w)_z \qquad (I)$$

wherein each a is independently either 0 or 1, y is an integer from 1 to 4, X is an alkyl, aryl, or alkaryl group having from 1 to 50 carbon atoms, z is an integer from 1 to 6, each R is independently selected from alkyl, oxyalkyl, alicyclic, aryloxy, alkaryl and aryl groups having from 1 to 20 carbon atoms, and w is an integer from 1 to 3, and further to a stereoregular polymer obtainable by the method according to the present invention which comprises randomly or in blocks, groups derived from at least one α-olefin and said silyl-containing monomer, having the general formula

$$-[CH_2-\underset{R^1}{CH}]_x---[-\ CH_2\ -\underset{(M)}{CH}]_y \qquad (O_{4-w}SiR^2{}_w)_z$$

wherein x is a mole fraction of the polymer derived from α-olefins and is a number from 0 to 0.9995, y is a mole fraction of the polymer derived from silyl containing monomer and is a number from 1.0 to 0.0005, x + y is equal to 1, M is an alkyl, aryl, or alkaryl group having 1 to 50 carbon atoms, z is an integer from 1 to 6, $R^1$ is selected from hydrogen and hydrocarbon groups having 1 to 8 carbon atoms, and each $R^2$ is independently selected from alkyl, oxyalkyl, alkaryl, alicyclic and aryl groups having from 1 to 10 carbon atoms.

The present method of making polymers having functional groups involves the introduction to the polymer chain of reactive sites which may be employed for other purposes as well as the fixation of dyes, by the use of specially made monomers blocked with silyl groups more fully described elsewhere herein, and the polymerization of the monomers, either alone or in the presence of other copolymerizable monomers in a polymerization system comprising a transition metal containing salt, a base metal alkyl, and optionally an external donor, i.e. any of the commonly used or classically described Ziegler-Natta catalyst systems.

The term "Ziegler-Natta catalysts" as used herein means all the catalysts and/or catalyst systems discussed by John Boor, Jr., in his book ZIEGLER-NATTA CATALYSTS AND POLYMERIZATIONS (Academic Press, 1979) particularly pages 33-35 under the subheading "Definition of Ziegler-Natta Catalysts", incorporated by reference herein. Generally, the term "Ziegler-Natta catalysts" includes all metal alkyls (or hydrides) of Groups I to III base metals together with transition metal salts of Groups IV to VIII transition metals. As discussed by Dr. Boor, this broad definition includes some combinations which are not commercially practical or even effective enough for laboratory study with certain monomers. As long as they are effective to some degree, under polymerization conditions, they are within the scope of our definition as used herein; the term "Ziegler-Natta catalyst" is also intended to include the possible presence of third or fourth substances such as electron donors, support materials, and the like. It should be observed also that an important feature of this invention is the protection of the Ziegler-Natta catalyst from attack by an active group which it is desired to insert in a polymer. Thus the term "Ziegler-Natta catalyst" assumes a polymerization system which is operable and effective to make a polymer so long as the catalyst is not rendered ineffective by an extrinsic substance such as a monomer containing an active group.

Effective polymerization conditions, i.e. pressure, temperature and solvent for Ziegler-Natta catalyst systems are well known; this invention is applicable to effect blocking of the monomer reactive sites at least to some degree under any such polymerization conditions.

The blocking of the reactive sites on the monomers in accordance with the present invention prevents them from attacking and/or destroying the Ziegler-Natta catalyst. After polymerization, and removal of the blocking groups, the reactive sites may find use to improve the compatibility of otherwise hydrophobic polymers such as polypropylene, polyethylene, and copolymers of propylene, ethylene and other olefins, with more hydrophilic polymers such as nylon, polyesters and cellulosics. Such hydrophobic and hydrophilic polymers often are miscible in the molten state, but solidify into separate phases. But with a hydrophilic moiety integrated in the polyolefin, they will tend to blend in a much more intimate fashion even in the solid state. The monomers and new polymers may also be used to form covalent linkages to various other functional groups, hydrocarbyl fragments, functionalized hydrocarbyl fragments, and other organic and inorganic moieties. Similarly they may function as graft sites for other polymeric chains. The introduction of such functional, organic and inorganic groups to a predominantly polyolefin chain imparts properties to

them hitherto unknown such as, for example, dyeability particularly by basic and reactive dyes, crosslinkability, adhesivity, wetability, and resistance to oxidative degradation.

The term "polymer" as used herein includes both homopolymers and copolymers. That is to say, the phrase "a polymer of a compound" having a general or specific formula or "a polymer including a compound" of a certain description "as a monomer" means that the mer units in the polymer may be derived from that compound or group of compounds only, or alternatively only some of the mer units are to be derived therefrom, in which case the balance of the mer units in the polymer may be derived from any one or more comonomers copolymerizable therewith. The term "alpha-olefin" is intended to include ethylene as well as other polymerizable olefins such as propylene and higher olefins with an unsaturated group in the alpha position, preferably having up to ten (10) carbon atoms.

A paradigm of the technique according to the present invention is as follows:

$$CH_2{=}CH(CH_2)_nOH + ClSiR_3 \dashrightarrow$$

$$CH_2{=}CH(CH_2)_nOSiR_3 + HCl\uparrow$$

$$CH_2{=}CHCH_3 + CH_2{=}CH(CH_2)_nOSiR_3 \dashrightarrow$$

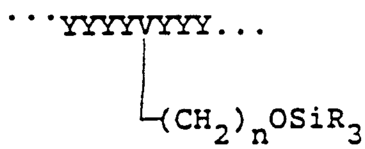

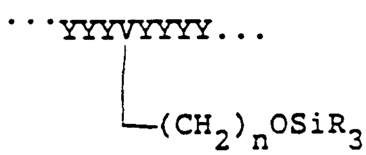

$$+ H_2O \dashrightarrow$$

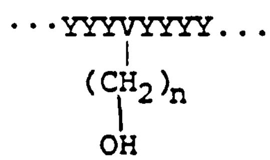

$$+ HOSiR_3$$

where n is a whole number from 1 to 50 preferably from 2 to 21; more preferably 3 to 10. In this preferred version, each R is independently selected from alkyl, aryl, aralkyl, alicyclic and oxyalkyl groups having from 1 to 20 carbon atoms; Y represents

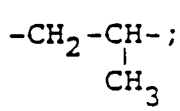

and V represents

$$CH_2-\underset{|}{C}H-.$$

Normally the reaction of the silyl monomer with propylene will be in a relatively high ratio of propylene to silyl monomer, since many properties can be imparted to the polypropylene with less than 5% of the silyl co-monomer polymerized with the propylene while maintaining a high molecular weight; however, copolymers with very high percentages of silyl monomer can readily be made and are useful. For example, copolymers of 99% or more silyl monomer and 1% or less ethylene or propylene and copolymers of as little as .05 percent silyl monomer and the balance olefin monomers are useful. Particularly useful copolymers are copolymers of 0.5 to 25 mole percent silyl-containing monomers and the balance alpha-olefins containing from 2 to 10 carbon atoms, preferably propylene. Homopolymers of the silyl monomers, and their activated derivatives, are also in accordance with this invention. All such homopolymers and copolymers exhibit stereoregularity. Stereoregularity in this context is intended to include copolymers of the silyl monomers with ethylene, in that the silyl mer units tend to be stereoregularly oriented and the ethylene groups polymerized in a Ziegler-Natta system tend to be entirely linearly oriented, i.e. without any branches. Of course, stereoregularity in silyl-ethylene copolymers is more discernable in the higher ratios of silyl to ethylene mer units. Alpha-olefin/silyl copolymers of this invention where the alpha-olefin has three carbon atoms or more are generally at least 40% stereoregular; when a donor such as DPMS is used, they may be 90% or more stereoregular. For our purposes a polymer which is 40% stereoregular may be considered substantially stereoregular. Copolymers will typically exhibit random distribution of mer units but block or sequential distributions may be effected by alternately varying concentrations of the monomers as known in the art.

Monomers containing silyl groups, such as those of the above paradigm formula $CH_2=CH(CH_2)_nOSiR_3$, tend to be neutral or beneficial in controlling stereoregular polymerization, and are incorporated in the polymer chain at a more or less predictable rate dependent on concentration and reactivity ratios; they are incorporated by way of olefin insertion onto metal-carbon single bonds.

However, certain types of polymerization cataysts should be avoided. Even though the silyl group ($SiR_3$) protects the ultimately desired polar function, there are some catalysts which cannot tolerate the polarity of the alkoxy silyl functionality, such as some non-Ziegler-Natta catalysts e.g. those which produce $H_2O$ or ROH during polymerization in acidic or basic media where $R'OSiR_3$ is not stable. So long as the alkoxy silyl group does not attack the catalysts, however, such polymerization systems are within the contemplation of our invention.

The present invention includes the polymerization of compounds of the formula $CH_2=CH(CH_2)_nOSiR_3$ where n is an integer from 1 to 50 and each R is independently selected from alkyl, alkaryl, oxyalkyl, alicyclic and aryl groups having from 1 to 10 carbon atoms.

Three general synthesis procedures were followed in the work described herein.

Method I, a general procedure for the synthesis of alkenoxy silanes and aralkenoxy silanes was as follows:

$CH_2=CH\text{-}CH_2[X]OH + ClSiR_3 + B$ ---
$CH_2=CH\text{-}CH_2[X]OSiR_3 + HCl\ B$

wherein X and R are as defined as above, B is a hydrogen halide acceptor such as pyridine, and other halides may be substituted for the chlorine. Generally the same procedure applies to the "paradigm" described above.

All operations were performed under inert gas, usually argon, by standard Schlenk tecnhiques or in a glove box/bag. All liquid reagents not supplied under inert atmosphere were purged with inert gas for at least 5 min prior to use; otherwise they were used as received, as were solid reagents.

A round bottom flask with a side arm was fitted with a magnetic stirring bar and a gas inletted addition funnel. The apparatus was assembled hot (from a drying oven), evacuated and refilled with inert gas. The evacuation/refill cycle was repeated between three and six times.

The flask was charged with a given amount of aralkenol [an organic compound containing at least one hydroxy group (HO-) and at least one terminal olefinic bond ($H_2C=CH$-) connected by an organic fragment described as X above, composed mainly of carbon and hydrogen and minimally being the methylene moiety ($-CH_2-$)], one, or slightly more than one, mole of a hydrogen halide acceptor (typically pyridine), per

mole of -OH and enough inert solvent to allow facile stirring even in the presence of the hydrogen halide acceptor salt which will precipitate from solution. The solvent was chosen for convenience of removal later. Generally low boiling solvents were used, such as ether. The addition funnel was charged with one mole halide (as halo silane--typically chloro tri-aralkyl silane) per mole of hydroxyl and a small to moderate amount of solvent. With stirring, the solution in the flask was cooled to 0°C and a slow addition of the halo silane was performed. After the addition was completed, the mixture was stirred for at least a half hour at 0°C and then allowed to warm to room temperature, generally overnight. At this stage the reaction mixture can be left for extended periods of time provided moisture is excluded.

The solid hydrogen halide acceptor complex was filtered off and washed with a volume of the inert solvent at least equal to about one-third the amount used during the reaction. Failure to thoroughly wash the solid tended to lower the isolated yield and resulted in yield estimations based on the weight of the recovered solid of more than 100%.

If the inert solvent were low boiling, it was next distilled from the filtrate. Otherwise it would subsequently be separated from the product by vacuum distillation.

The usual method of product purification consisted of an atmospheric pressure distillation followed by a vacuum distillation from a mixture of the once distilled product and triethyl aluminum (TEA). TEA addition was used to facilitate distillation by combining with reactive compounds which were expected to boil near the boiling point of the desired monomer. Elimination of TEA addition may easily be effected, for example, by careful distillation. The addition of TEA was a convenience rather than a necessity. If the product was expected to boil near the temperature at which TEA boils the addition of TEA was avoided. Similarly if the product was expected, or found, to boil at a very high temperature the atmospheric pressure distillation was not performed, in which case TEA was added or not to the reduced pressure distillation. And finally if a poly-test indicated satisfactory performance with a once distilled (or non-TEA containing) distillation, the second (or TEA containing) distillation could be eliminated. Purification with TEA is not related to the use of the Ziegler-Natta systems except with respect to the generally improved polymerization results; however, even impure materials have polymerized to some degree. Boiling point information was obtained from these distillations. Atmospheric pressure boiling points were uncorrected for actual atmospheric pressure at time of distillation.

For convenience in handling, a rough estimate of the density of each product was made by weighing an empty calibrated syringe and the same syringe containing a known volume of the product. The weight difference and indicated volume were used to calculate a density estimate. This procedure was used for the first few times a product was transferred and, when convenient to obtain accurate weight information, afterwards.

A second method applies to the synthesis of aralkenoxy silanes:

$$mCH_2=CHCH_2(X)OH + pNa + (R'O)_{4-w}SiR_w \dashrightarrow$$
$$[CH_2=CH\text{-}CH_2(X)O]_m(R'O)_{4-w-m}SiR_w + (m-p)R'OH\uparrow$$
$$+ pR'ONa$$

where m is an integer from 1 to (4-w), R' is an alkyl group chosen so that R'OH has a low boiling point (preferably less than about 125°C), w is an integer from 0 to 3, and p is a small number less than 1.

The general apparatus set up was as for Method 1 except no addition funnel was required. The aralkenol and aralkoxy aralkyl silane in a 1:1 molar ratio were combined in a flask to which was then added approximately 0.01 mole of sodium per mole of aralkenol. Alternately the aralkenol and the sodium were reacted together before the silane was added. In either case the mixture was stirred at room temperature till the sodium dissolved. This was done under a static head of inert gas. Upon dissolution of the sodium, the reaction flask was fitted with a distillation head, condenser and collection flask. The temperature of the reaction mixture was raised to 10-20°C above the boiling point of the alcohol to be distilled away as a very slow inert gas purge was established into the reaction flask, up through the distillation head and condenser and out through the collection flask, which may have been cooled to facilitate collection of the alcohol. Alternately, or in conjunction with this method of alcohol removal, an inert solvent which formed an azeotrope with the alcohol, or which boiled slightly above the alcohol, could have been added to the reaction mixture and then distilled away.

Final product purification was as for Method 1. Except when $\omega$-undecenyl alcohol was reacted with diphenyl dimethoxy silane the only purification was to distill away all low boiling compounds. R'ONa remained in the product.

A third general method was as follows:

$m\ CH_2 = CH\text{-}CH_2(X)OH + Y_nSiR_{(4-n)}$--->
$[CH_2 = CH\text{-}CH_2(X)O]_mY_{n-m}SiR_{4-n} + mYH\uparrow$

where n is an integer from 1 to 4, m is an integer, less than or equal to n, and from 1 to 3 and YH is a compound which boils at less than about 70 ° F.

Method 3 is very similar to Method 2; the main differences are that in Method 3 no catalytic sodium is required and YH is very volatile at room temperature and so heating is not required. Reaction mixtures were nevertheless generally heated in order to increase reaction rate and decrease solubility of YH. Heating was from 18 h to a few days.

Y can be $Cl^-$ provided that the hydroxyl group in $R^=OH$ (where $R^=$ corresponds to $CH_2 = CH\text{-}X$-with X defined as above) is attached to an aromatic ring (otherwise the yield will be low). In this case HCl is given off.

If Y is $NR''_2$, where R'' is a small alkyl group (1-3 carbons), YH is a low boiling amine.

Product purification was as for Method 1 but good results can be obtained without further purification.

Paradigm of Method 1 Synthesis

3-Butenoxy Triethylsilane

$H_2C = CH\text{-}CH_2CH_2\text{-}O\text{-}Si(CH_2CH_3)_3$

All operations were conducted under inert atmosphere using standard Schlenk and/or glove box techniques.

Into a 1.0 l round bottom flask fitted with a gas inlet, a magnetic stirring bar and a 125 ml gas inletted addition funnel, which apparatus had been assembled hot, evacuated and refilled with argon five times, were charged 24.88 g of 3-butenol (Aldrich, 0.34 mol), 27.01 g of pyridine (Aldrich, 0.34 mol) and 150 ml anhydrous, Argon purged, ether (Aldrich). To the addition funnel were added 50 g of chloro triethyl silane (Alfa, 0.34 mol) and 50 ml of anhydrous ether.

The 1.0 l flask was cooled to 0 ° C in an ice/water bath with magnetic stirring of its contents. After a short time slow addition of the chlorotriethylsilane solution was begun. A white precipitate formed immediately. After the addition was completed, the mixture was stirred an additional two h at 0 ° C. It was then allowed to warm to room temperature overnight.

The solid pyridinium hydrochloride was separated from the solution by filtration. It was washed with about 100 ml of anhydrous ether.

The ether was removed from the filtrate by atmospheric pressure distillation. A purification was also effected by atmospheric pressure distillation. The materials which distilled below 186 ° C were discarded as well as the first few ml of product that distilled at 186 ° C. The product was collected between 186 ° C and 189 ° C with the several ml of material remaining in distillation flask being discarded. Isolated yield was 37.03 g or 58% based on starting alcohol.

A second purification was effected by a vacuum distillation from triethylaluminum (TEA): A 100 ml round bottom gas inletted flask fitted with a short path distillation head and a 50 ml collection flask was charged with 32.60 g of the product (3-butenoxy triethyl silane) and 5.0 ml of a TEA solution in heptane (Texas alkyls, 25.1 wt.%, density = 0.715 g/ml). All product that was collected at a pressure of 0.67 ± 0.03 kPa (5.0 ± 0.25 mm Hg) up to about 61 ° C was discarded. The product was collected into a new collection flask at 63.0 ° C at a pressure of 0.67 ± 0.03 kPa (5.0 ± 0.2 mm Hg). The total collected product weighed 23.59 g.

For the product expected to be 3-butenoxy triethyl silane, the following properties were obtained:

| | |
|---|---|
| Boiling point: 186-188 ° C; | P = 101.3 kPa (1 atm.) (uncorrected) |
| 63.0 ° C; | P = 0.67 ± 0.03 kPa (5.0 ± 0.2 mm Hg) |
| Density (3 determinations): | 0.86 ± 0.02 g/ml. |

$^{13}$Cnmr analysis subsequently confirmed the product as 3-butenoxy triethyl silane.

1, 2, 4, 5, 9, and 11 Monomer Examples

Method 1 was used to react 2-propenol, 3-butenol (detailed synthesis described above), 5-hexenol, and 7-octen-1,2-diol with various halo silanes. The solvent was ether. Specifics of the reactions are described in Tables 1 and 3.

Monomer Examples 6 and 8.

Hepta-1,6 dien-4-ol, and 10-undecenol were reacted with alkoxy silanes according to Method 2. Details are shown in Tables 2 and 3.

Monomer Examples 7 and 10.

2-Allylphenol and 2-methyl-3-buten-2-ol were silylated according to method 3. See Tables 2 and 3 for further elucidation.

Monomer Example 3.

Using standard inert atmosphere techniques 31.5 ml (0.15 mol) of dichloro diphenyl silane and 50 ml anhydrous ether were charged to a 500 ml round bottom, gas inletted, flask fitted with a magnetic stirring bar and a 125 ml addition funnel.

The addition funnel was charged with 15.5 ml of 4-pentenol (0.15 mol), 12.1 ml pyridine (0.15 mol) and about 97 ml of anhydrous ether. The dropwise addition of the alcohol/pyridine solution was begun to the vigorously stirred chloro silane solution. The temperature of the reaction flask was kept between 20 and 24 °C by a water bath. The reaction mixture was stirred for an additional three hours after the completion of the addition and then allowed to rest undisturbed.

The pyridinium hydrochloride was filtered off and washed with 100 ml and then 50 ml of ether. About 50 ml of the filtrate was removed via argon purge.

The collection flask was fitted with an additional flask which was purged with argon and then charged with 51 ml of a 3.0 molar ethyl magnesium bromide solution in ether (0.15 mol). This solution was added incrementally over about two hours to the vigorously stirred filtrate solution. Stirring was maintained for two hours more and then the reaction mixture was allowed to remain undisturbed overnight.

The resultant slurry was filtered. The solid on the frit was washed with about 75 ml of ether. Then the ether was vacuum stripped from the filtrate to leave an oily liquid in which a white solid was suspended. This product was slurried in about 100 ml of n-pentane and the resultant slurry was filtered. The pentane was vacuum stripped again leaving an oil in which there was a small amount of white solid suspended. This solid settled out in a few days.

Total isolated yield was 22 g which is about 49%. lHnmr spectra confirmed the nature of the product as 4-pentenoxy diphenyl ethyl silane.

Table 3 lists available rough density estimations.

Table 1

Method 1 Syntheses

| Reactants: Aralkenol | Reactants: Silane | Molar Ratio Silane/Aralkenol | Solvent: Ratio of Wash Vol. to Rxn Vol. | Yield (%): Total Isolated | Distillation # #1 | Distillation # #2 | Compound Name | Example # |
|---|---|---|---|---|---|---|---|---|
| Allylalcohol (2-Propenol) | Chloro diphenyl methyl silane | 0.92 | 0.3 | 82 | TEA VAC. | --- | 2-Propenoxy diphenyl methyl silane | 1 |
| 3-Butenol | Chloro triethyl silane | 1.00 | 0.5 | 58 | --- 760mm | TEA VAC. | 3-Butenoxy tri-ethyl silane | 2 |
| 5-Hexenol | Chloro trimethyl silane | 1.01 | 0.5 | 80 | --- 760mm | --- | 5-Hexenoxy tri-methyl silane | 4 |
| | | 1.00 | 0.5 | 66 | --- 760mm | TEA VAC. | 5-Hexenoxy tri-methyl silane | 4 |
| 5-Hexenol | Chloro dimethyl ethyl silane | 0.95 | --- | 73 | TEA VAC. | --- | 5-Hexenoxy di-methyl ethyl silane | 5 |
| 7-Octen-1, 2-diol | Chloro trimethyl silane | 2.03 | 0.7 | --- | --- 760mm | --- | 1, 2-Di (tri-methylsiloxy) 7-octene | 9 |
| 5-Hexenol | Chloro dimethyl isopropyl silane | 0.99 | --- | 65 | VAC; TEA | --- | 5-Hexenoxy di-methyl isopropyl silane | 11 |

Table 2

Methods 2 & 3 Syntheses

| Reactants: Aralkenol | Reactants: Silane | Molar Ratio Silane/Aralkenol | Solvent | Na/Aralkenol (mol/mol) | Nature of Y-H | Yield (%) Recovered ROH | Yield (%) Total Isolated | Distillation | Compound Name | Example # |
|---|---|---|---|---|---|---|---|---|---|---|
| Hepta-1,6-dien-4-ol | Ethoxy dimethyl phenyl silane | 0.98 | None | 0.01 | N.A. | 80 | --- | vacuum | 4-(Dimethyl phenylsiloxy)-1,6-heptadiene | 6 |
| ω-Undecenyl alcohol (or 10-Undecenol) | Dimethoxy diphenyl silane | 1.00 | n-Heptane | 0.01 | N.A. | 85 | --- | Not able | 10-Undecenoxy methoxy diphenyl silane | 8 |
| 2-Methyl-3-buten-2-ol | Tris (dimethyl amino) phenyl silane | 0.31 | None | N.A. | Dimethyl Amine | — | — | — | Tris-(2-Methyl-3-buten-2-oxy) phenyl silane | 10 |
| 2-Allylphenol | Chloro tribenzyl silane | 0.99 | Toluene | N.A. | HCl | — | Estimated as 70% Reaction Incomplete | — | 2-Allylphenoxy tribenzyl silane | 7 |

Table 3

| Aralkyl (and Aralkoxy) Siloxyaralkene Characteristics | | | | |
|---|---|---|---|---|
| Compound (Example) | Boiling Point (° C) | Pressure (mmHg) | Approximate density (g/ml) | Number of density determinations |
| 1 | 224-232<br>156 + 1<br>157 + 1 | 91±1<br>6.3±0.9<br>6±1 | 1.07±.03 | 4 |
| 2 | 186-188<br>63.0 | 760<br>5.0±0.2 | 0.86±0.02 | 3 |
| 3 | --- | --- | 0.97±.07 | 2 |
| 4 | 165<br>79<br>74 | 760<br>45<br>39 | 0.85±0.02 | 4 |
| 5 | 93.0±0.9 | 29.9±0.6 | 0.855±0.019 | 10 |
| 6 | 130 + 1 | 8.7 | | |
| 7 | --- | --- | solid | --- |
| 8 | 214 | 2.7 | solid | --- |
| 9 | 242-244 | 760 | 0.851±0.003 | 3 |
| 10 | --- | -- | 1.02 | 1 |
| 11 | 82 | 9.8 | 0.804 | 2 |

Thus it may be seen that we have prepared a class of compounds which are useful in making polymers for various purposes as recited elsewhere herein. Our invention includes the use to form polymers of compounds of the general formula

$(CH_2 = CH\text{-}CH_2)_y\ (X)\ (O_{4\text{-}w}SiR_w)_z$

where y is an integer from 1 to 4, X is an alkyl, aryl, alicyclic, or alkaryl group having about 1 to about 50 carbon atoms, z is an integer from 1 to about 6, each R is independently selected from alkyl, oxyalkyl, alkaryl and aryl groups having from 1 to about 20 carbon atoms, and w is an integer from 1 to 3. More specifically, our invention includes the polymerization of compounds of the general formula

$CH_2 = CH\text{-}(CH_2)_n\text{-}O\text{-}SiR_3$

where n is an integer from 1 to about 50 and each R is independently selected from alkyl, oxyalkyl, alkaryl and aryl groups having from 1 to about 10 carbon atoms. Examples of compounds which may be polymerized in our invention include 2-propenoxy dimethyl phenyl silane, 2-propenoxy-diphenyl methyl silane, 2-propenoxy triisopropyl silane, and other compounds of the general formula

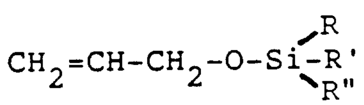

wherein R is an isopropyl group and R' and R'' are independently selected from alkyl, oxyalkyl, alkaryl and aryl groups having from 1 to about 20 carbon atoms.

General Copolymerization Procedure

Case 1 - One comonomer being gaseous

Standard inert atmosphere techniques were used to exclude moisture and oxygen throughout the manipulations recited below.

A round bottom flask fitted with a side arm, a magnetic stirring bar and a stopper, which apparatus had been assembled hot from a drying oven and was then either evacuated and refilled with inert gas several times or (and) purged with the inert gas for at least 15 min, was charged with a given amount of solvent, heptane or toluene, usually 125 ml. The solvents were freshly distilled from sodium and triethyl aluminum (TEA) over which they had been refluxing for at least 18 h under an inert atmosphere. Immediately after the solvent had been charged to the flask a given amount (see Tables A and B) of alkyl aluminum co-catalyst, which was in the form of a heptane solution of about 25 wt.% (0.715 g/ml in heptane), was also added to the flask which was then lowered into a thermostated oil bath and magnetic stirring was begun.

At this point the inert gas atmosphere in the flask was replaced with the gaseous comonomer by a minimum of 3 cycles of evacuation and refilling back to atmospheric pressure with the comonomer. After the third cycle the solution was stirred for at least 10 min (usually longer) to allow the solvent to become saturated with the comonomer. The pressure was maintained at about 101.3 kPa (one atmosphere) via a bubbler.

Next were added an "external donor", which usually was diphenyl dimethoxy silane or phenyl triethoxy silane, if one was being used, and the other comonomer. The polymerization was initiated by the addition of the transition metal containing co-catalyst.

As the gaseous comonomer was consumed it was replaced by maintaining the pressure constant at 101.3 kPa (one atmosphere) via a bubbler.

After a specified period of time (see "run, time" in Tables A and B) the reaction was quenched by the addition of acidified alcohol (HCl in iso-propanol, ethanol, and/or methanol). The quenched reaction slurry was combined with the alcohol solution of volume at least twice the original volume of the inert reaction solvent. The resultant slurry was stirred for at least 45 min and then filtered. This treatment not only stopped the reaction, it dissolved catalyst residues and removed the silyl groups and thus regenerated the hydroxyl groups.

If the filtration proceeded very slowly, the slurry was combined with enough water to make the filtration proceed at a convenient rate.

The polymer was resuspended in alcohol, stirred, filtered and vacuum dried overnight. The boiling heptane soluble content was determined by standard methods.

Some variations in the procedure were possible.

If the second comonomer was a solid, it was added as a solid or as a solution in the inert solvent.

If no solvent was used, the second comonomer was combined with the alkyl aluminum co-catalyst, and possibly other components excluding the transition metal containing co-catalyst, and this solution was saturated with the gaseous comonomer.

Case 2 - Neither comonomer being gaseous

These polymerizations were run in essentially the same manner as the previous polymerizations. Since the comonomer was not a gas however the evacuation and refilling of the polymerization vessel with the comonomer was unnecessary. The monomer was syringed (if it was a liquid or in solution) into the inert solvent prior to the alkyl aluminum addition. From this point on Case 2 polymerizations were identical to Case 1 polymerizations.

General Homopolymerization Procedure

In general these procedures were very similar to the copolymerization procedures except that the problem of introducing the comonomer was obviated. The general sequence of combination of the catalytic system components was as follows (with all the apertaining restrictions required by the exclusion of air from the reactor as in the copolymerizations): solvent (if used); monomer; alkyl aluminum co-catalyst; external donor (if used); transition metal co-catalyst. occasionally, the external donor was combined with the reaction mixture prior to the alkyl aluminum compound.

The workup of these polymers was somewhat more difficult than that of the copolymers. There was a marked tendency for the homopolymers to dissolve in acidified alcohol, so much more water was required.

If a product dissolved, it was reprecipitated by the addition of large amounts of water. If this treatment was required, often the plain alcohol wash step was eliminated. Boiling heptane extractions usually were not performed.

Details of all polymerizations are indicated in Table A. Compound numbers refer to the compounds made in the respective monomer syntheses examples 1-11; compound 12 is a commercial sample of O-trimethylsilylallyl alcohol. Table A-1 lists parameters of copolymerizations with propylene at a pressure of one (1) atmosphere. Table A-2 lists copolymerization parameters used with comonomers other than propylene. Gaseous monomers were held at 101.3 kPa (1 atmosphere); liquid monomers were employed at the indicated concentrations. Table A-3 presents details of the homopolymerizations of the designated aralkenoxysilanes. Solvent volumes (in ml) are listed only when they differ from 125 ml. Yields and characteristics of the desilylated polymers are shown in Tables C and D. All NMR results of homopolymers and copolymers indicated stereoregularity of the desilylated polymers.

Comparison Polymerizations

That the parent alkenols do not copolymerize under conditions comparable to those in which the finished protected monomers polymerize is demonstrated by attempted co-polymerizations of propylene and unsilylated alcohols. Various copolymerizations were run to show the polymerization capabilities of this class of compounds. Details of the polymerizations are shown in Table B; results and polymer characteristics are shown in Table E. Allyl phenyl ether is employed in one attempt; its inability to polymerize demonstrates that the presence of an ether group alone is not sufficient to permit polymerization.

Table A-1

Polymerization Parameters -
Copolymerizations with Propylene

| Aralkenoxysilane | | | Solvent | Ext. Donor | | Al. Cocat. | | Trans Metal Cocat. | | Run Time | Temp. (°C.) |
|---|---|---|---|---|---|---|---|---|---|---|---|
| Cmpd. | # Run | Conc. (M) | Name | Name | Conc. (M) | Name | Conc. (M) | Name | Wght (mg) | (hrs) | |
| 1 | 198 | 2.13 | -- | DPMS | 0.019 | TEA | 0.75 | FT-1-SS | 1063 | 6days | 20 |
| | 213 | .4 | $nC_7$ | DPMS | .003 | TEA | .06 | FT-1-SS | 513 | 4 | 55 |
| | 215 | 0.85 | $nC_7$ (17) | DPMS | 0.009 | TEA | 0.46 | FT-1-SS | 1033 | 25 | 60 |
| 2 | 160 | 3.43<br>2.72 | -- | -- | -- | TEA | 0.40<br>0.64 | FT-1-SS | 298<br>879 | 2<br>2 | 55 |
| | 226 | 0.20 | $nC_7$ | -- | -- | DEAC | 0.11 | $TiCl_3$ | 472 | 4 | 50 |
| 3 | 162 | 2.58 | -- | -- | -- | TEA | 0.39 | FT-1-SS | 667 | 3 | 60 |
| | 218 | 0.13 | $nC_7$ | DPMS | 0.006 | TEA | 0.11 | FT-1-SS | 271 | 2 | 50 |
| 4 | 125 | 0.05 | $nC_7$ (300) | -- | -- | TEA | 0.26 | FT-1-SS | 1080 | "24" | 20 |
| | 126 | 0.29 | -- | -- | -- | TEA | 1.50 | FT-1-SS | 294 | "24" | 20 |

Table A-1 (Continued)

Polymerization Parameters -
Copolymerizations with Propylene

| Aralkenoxysilane # Cmpd. | Run | Aralkenoxysilane Conc. (M) | Solvent Name | Ext. Donor Name | Ext. Donor Conc. (M) | Al. Cocat. Name | Al. Cocat. Conc. (M) | Trans Metal Cocat. Name | Trans Metal Cocat. Wght (mg) | Run Time (hrs) | Temp. (°C.) |
|---|---|---|---|---|---|---|---|---|---|---|---|
| 4 | 128 | 2.06 / 1.32 | $nC_7$ == / 10 | — | — | TEA | 0.88 / 0.57 | FT-1-SS | 510 | 0.5 / 1 | 20 |
| | 144 | 0.40 | tol (100) | — | — | TEA | 0.069 | FT-1-SS | 500 | 3 | 50 |
| | 145 | 0.40 | tol (100) | PES | .0034 | TEA | 0.069 | FT-1-SS | 950 | 3 | 50 |
| | 146 | 0.73 | tol (100) | PES | .0124 | TEA | 0.063 | FT-1-SS | 850 | 3 | 70 |
| | 245 | 0.117 | $nC_7$ | DPMS | .0030 | TEA | 0.059 | FT-1-SS | 258 | 2 | 50 |
| | 246 | 0.324 | $nC_7$ | DPMS | .0080 | TEA | 0.156 | FT-1-SS | 185 | 2 | 55 |
| | 251 | 0.314 | $nC_7$ | DPMS<br>$Et_2N$--$SiMe_3$ | .0079<br>.0157 | TEA | 0.155 | FT-1-SS | 287 | 2 | 50 |
| | 253 | 0.368 | $nC_7$ (50) | DPMS | .0167 | TEA | 0.311 | FT-1-SS | 254 | 2 | 55 |
| 5 | 247 | 0.117 | $nC_7$ | DPMS | .0030 | TEA | 0.058 | FT-1-SS | 266 | 2 | 55 |
| | 248 | 0.317 | $nC_7$ | DPMS | .0079 | TEA | 0.155 | FT-1-SS | 253 | 2 | 55 |
| | 252 | 0.318 | $nC_7$ | DPMS<br>$Et_2N$--$SiMe_3$ | .0079<br>.0156 | TEA | 0.154 | FT-1-SS | 202 | 2 | 50 |
| | 254 | 0.635 | $nC_7$ (50) | DPMS | .0157 | TEA | 0.308 | FT-1-SS | 266 | 2 | 50 |

Table A-1 (Continued)

Polymerization Parameters -
Copolymerizations with Propylene

| Aralkenoxysilane # Cmpd. | Run | Conc. (M) | Solvent Name | Ext. Donor Name | Ext. Donor Conc. (M) | Al. Cocat. Name | Al. Cocat. Conc. (M) | Trans Metal Cocat. Name | Trans Metal Cocat. Wght (mg) | Run Time (hrs) | Temp. (°C.) |
|---|---|---|---|---|---|---|---|---|---|---|---|
| 6 | 243 | 0.123 | $nC_7$ | PES | .0031 | TEA | 0.060 | FT-1-SS | 234 | 2 | 50 |
| | 244 | 0.232 | $nC_7$ | PES | .0058 | TEA | 0.112 | FT-1-SS | 238 | 2 | 50 |
| 7 | 236 | 0.17 | tol (90) | DPMS | .01 | TEA | 0.12 | FT-1-SS | 1117 | 2 | 50 |
| | 237 | 0.13 | tol (175) | DPMS | .01 | TEA | 0.13 | FT-1-SS | 1070 | 2 | 50 |
| 8 | 220 | 0.35 | tol | -- | -- | TEA | 0.13 | FT-1-SS | 216 | 2 | 50 |
| | 227 | 0.29<br>0.27 | tol | -- | -- | DEAC | 0.05<br>0.12 | $TiCl_3$ | 606 | 2<br>2 | 55 |
| | 228 | 1.01 | tol (40) | -- | -- | TEA | 0.41 | FT-1-SS | 1425 | 2 | 55 |
| 9 | 169 | 0.389 | tol (100) | DPMS | .0069 | TEA | 0.065 | GF2A | 456 | 3 | 70 |
| | 175 | 2.46 | -- | DPMS | .0269 | TEA | 0.253 | FT-1-SS | 813 | 3 | 60 |
| | 223 | 0.109 | $nC_7$ | PES | .0030 | TEA | 0.059 | FT-1-SS | 305 | 2 | 55 |
| 10 | 250 | 0.116 | $nC_7$ | DPMS | .0031 | TEA | 0.060 | FT-1-SS | 270 | 2 | 55 |
| 11 | 277 | 0.125 | $nC_7$ | DPMS | .0030 | TEA | 0.058 | FT-1-SS | 323 | 2 | 50 |
| | 278 | 0.344 | $nC_7$ | DPMS | .0028 | TEA | 0.055 | FT-1-SS | 366 | 2 | 50 |
| | 279 | 0.694 | $nC_7$ (50) | DPMS | .0061 | TEA | 0.119 | FT-1-SS | 360 | 2 | 50 |
| | 280 | 0.359 | $nC_7$ | DPMS<br>$Et_2N$--$SiMe_3$ | .0028<br>.0054 | TEA | 0.055 | FT-1-SS | 296 | 2 | 50 |
| 12 | 241 | 0.118 | $nC_7$ | DPMS | .0030 | TEA | 0.059 | FT-1-SS | 469 | 2 | 50 |

Table A-2

Polymerization Parameters ($M_2 \cdot C_3^=$)
Copolymerizations with Comonomers other than Propylene

| Aralkenoxysilane | | | Comonomer | | Solvent | Ext. Donor | | Al. Cocat. | | Trans Metal Cocat. | | Run Time | Temp. (°C.) |
|---|---|---|---|---|---|---|---|---|---|---|---|---|---|
| # Cmpd. | Run | Conc. (M) | Name | Conc. (M) | Name | Name | Conc. (M) | Name | Conc. (M) | Name | Wght (mg) | (hrs) | |
| 5 | 274 | 0.384 | $C_2^=$ | 1 atm. | $nC_7$ (100) | -- | -- | TEA | 0.13 | FT-1-SS | 1271 | 2 | 55 |
| 9 | 233 | 0.240 | $C_6^=$ | 1.42 | $nC_7$ (100) | DPMS | .0029 | TEA | 0.056 | FT-1-SS | 282 | 2 | 50 |
| 11 | 281 | 0.303 | $C_6^=$ | 0.290 | $nC_7$ | DPMS | .0028 | TEA | 0.054 | FT-1-SS | 261 | 4 | 50 |
| 5 | 270 | 0.124 | $C_8^=$ | 2.29 | $nC_7$ (75) | PES | .0031 | TEA | 0.060 | FT-1-SS | 254 | 3 | 50 |
| None | 273 | -- | $C_2^=$ | 1 atm. | $nC_7$ (100) | -- | -- | TEA | 0.141 | FT-1-SS | 1952 | 2 | 60 |
| None | 219 | -- | $C_6^=$ | 1.67 | $nC_7$ (100) | DPMS | .0032 | TEA | 0.062 | FT-1-SS | 594 | 2 | 55 |
| None | 269 | -- | $C_8^=$ | 2.35 | $nC_7$ (75) | PES | .0031 | TEA | 0.061 | FT-1-SS | 254 | 3 | 50 |

Table A-3

Homopolymerization Parameters

| Aralkenoxysilane | | | Solvent | Ext. Donor | | Al. Cocat. | | Trans Metal Cocat. | | Run Time | Temp. (°C.) |
|---|---|---|---|---|---|---|---|---|---|---|---|
| Cmpd. | # Run | Conc. (M) | Name | Name | Conc. (M) | Name | Conc. (M) | Name | Wght (mg) | (hrs) | |
| 1 | 197 | 208 | -- | DPMS | 0.019 | TEA | 0.73 | FT-1-SS | 1024 | 4days | 26 |
| | 214 | 1.91 | -- | -- | -- | TEA | 0.88 | FT-1-SS | 1481 | 15days | 60 |
| 2 | 159 | 1.58 | -- | -- | -- | TEA | 1.05 | FT-1-SS | 1469 | 3days | 20 |
| | 11153-027 | 2 | -- | -- | -- | TEA | .8 | FT-1-SS | 373 | 3.5 | 75 |
| 3 | 11153-022 | 1.09 | -- | -- | -- | TEA | 1.05 | FT-1-SS | 327 | 2 | 20 |
| 4 | 117 | 0.42 | -- | -- | -- | TEA | 1.45 | FT-1-SS | 989 | 6days | 20 |
| | 118 | 0.42 | -- | -- | -- | TEA | 1.45 | FT-1-SS | 893 | 7days | 20 |
| | 134 | $\frac{2.88}{1.64}$ | $nC_7\left(\frac{0}{10}\right)$ | -- | -- | TEA | $\frac{1.20}{0.69}$ | FT-1-SS | 156 | $\frac{1}{3}$ | 20 |
| | 135 | 0.71 | $nC_7$ (40) | -- | -- | TEA | 0.15 | FT-1-SS | 150 | 5days | 20 |

Table A-3 (Continued)

Homopolymerization Parameters

| Aralkenoxysilane | | | Solvent | Ext. Donor | | Al. Cocat. | | Trans Metal Cocat. | | Run Time | Temp. (°C.) |
|---|---|---|---|---|---|---|---|---|---|---|---|
| # Cmpd. | Run | Conc. (M) | Name | Name | Conc. (M) | Name | Conc. (M) | Name | Wght (mg) | (hrs) | |
| 4 | 136 | 2.43<br>1.61<br>1.20<br>0.96 | -- | -- | -- | TEA | 0.81<br>1.07<br>1.20<br>1.28 | FT-1-SS | 101 | 2<br>16<br>8<br>18 | 20 |
| 8 | 229 | 0.54 | tol (85) | -- | -- | TEA | 0.24 | FT-1-SS | 1936 | 3days | 55 |
| 9 | 170 | 0.725 | tol (25) | -- | -- | TEA | 0.198 | FT-1-SS | 1108 | 18 | 20 |
| 7 | 238 | 0.31 | tol (25) | DPMS | .03 | TEA | 0.53 | FT-1-SS | 1406 | 5days | 85 |

Table B

Polymerization Parameters

| Run # | Monomer | | Solvent | Ext. Donor | | Al. Cocat. | | Trans Metal Cocat. | | Run Time | Temp. |
|---|---|---|---|---|---|---|---|---|---|---|---|
| | Name | Conc. (M) | Name | Name | Conc. (M) | Name | Conc. (M) | Name | Wght (mg) | (hrs) | (°C.) |
| 310 | allylalcohol | 0.123 | $nC_7$ | DPMS | .0030 | TEA | 0.059 | FT-1-SS | 436 | 2 | 50 |
| 234 | 2-Allyl phenol | 0.268 | $nC_7$ (50) | DPMS | .007 | TEA | 0.137 | FT-1-SS | 262 | 2 | 50 |
| 232 | Allyl phenyl ether | 0.656 | $nC_7$ (100) | DPMS | .0035 | TEA | 0.068 | FT-1-SS | 376 | 2 | 50 |
| 239 | 4-Pentenol | 0.114 | $nC_7$ | DPMS | .0030 | TEA | 0.059 | FT-1-SS | 234 | 2 | 50 |

Table C (Part 1)

RESULTS OF COPOLYMERIZATIONS WITH PROPYLENE ($M_2$ = Propylene)

| Run # | $M_1$ | Composition: Mole fraction $M_1$ | Composition: Wt. fraction $M_1$ | Composition: Method | Yield g/g cat | Boiling Heptane Insol. (%) | $T_m$ (°C) | $T_c$ (°C) | $M_w$ x1000 | $M_n$ x1000 | $M_w/M_n$ |
|---|---|---|---|---|---|---|---|---|---|---|---|
| 198 | 1 | | | | Run Abandoned | | | | | | |
| 213 | " | 0.020 | 0.028 | El.Anal | 7.5 | 91.9 | | | 398 | 66.2 | 6.01 |
| 215 | " | <.01 | | EA | 2.0 | | | | 162 | 16.5 | 9.80 |
| 160 | 2 | 0.045 | 0.072 | NMR | | | | | | | |
| | | 0.030 | 0.053 | EA | 1.5 | 76.0 | 150.5 | ↑11.5 | • | | |
| 226 | " | 0.033 | 0.055 | EA | 20.5 | 76.0 | | | 27.1 | 5.33 | 5.09 |
| 162 | 3 | not fully | | NMR | | | 60 | 91 | | | |
| | | deprotected | | | 9.2 | 16.4 | 146 | 65 | 133 | 24.2 | 5.48 |
| 218 | " | 0.034 | 0.068 | EA | 130 | 96.8 | | | 336 | 46.6 | 7.22 |
| 125 | 4 | 0.022 | 0.051 | EA | 27.9 | 91.1 | | | | | |
| 126 | " | Trace | | NMR | | | | | | | |
| | | 0.010 | 0.024 | EA | 60.7 | 80.2 | | | | | |
| 128 | " | 0.056 | 0.125 | NMR | | | | | | | |
| | | 0.049 | 0.110 | EA | 19.6 | 88.1 | 149.0 | 107.9 | 533 | 30.1 | 17.7 |
| 144 | " | 0.042 | 0.094 | EA | 12 | 55.9 | | | 160 | 33.1 | 5.07 |
| 145 | " | 0.034 | 0.078 | EA | 16 | 92.1 | | | 581 | 72.5 | 8.01 |
| 146 | " | 0.061 | 0.134 | EA | >3 | 71.9 | | | 385 | 51.9 | 7.41 |
| 245 | " | 0.018 | 0.043 | EA | 60.3 | 95.9 | | | | | |
| 246 | " | 0.146 | 0.209 | EA | 22.5 | 86.0 | | | | | |
| 251 | " | 0.037 | 0.084 | EA | 62.7 | 94.5 | | | | | |
| 253 | " | 0.068 | 0.147 | EA | 36.6 | 93.7 | | | | | |
| 271 | 5 | -- | -- | -- | 14.5 | 96.1 | | | | | |
| 247 | " | 0.025 | 0.058 | EA | 104 | 97.0 | | | | | |
| 248 | " | 0.057 | 0.126 | EA | 84.5 | 91.1 | | | | | |
| 252 | " | 0.019 | 0.044 | EA | 95.1 | 97.3 | | | | | |
| 254 | " | 0.142 | 0.283 | EA | 19.0 | 95.4 | | | | | |
| 261 | " | 0.033 | 0.076 | EA | 78.7 | 97.1 | | | | | |
| 262 | " | 0.017 | 0.040 | EA | 101 | 97.8 | | | | | |
| 243 | 6 | 0.096 | 0.221 | EA | 73.8 | 63.2 | 142.3 | 106.4 | | | |
| 244 | " | <.01 | | NMR | | | | | | | |
| | | 0.070 | 0.167 | EA | 67.3 | 69.3 | 161.7 | 117.2 | | | |
| 282 | " | 0.009-0.013 | 0.025-0.035 | EA | 7.3 | 35.6 | | | | | |
| 236 | 7 | <.01 | — | NMR | | | | | | | |
| | | <.08 | <.21 | EA | 47.7 | 98.7 | | | | | |
| 237 | " | 0.002-0.014 | 0.006-0.031 | EA | 55.4 | 93.6 | 158.9 | 115.4 | | | |
| 220 | 8 | 0.013 | 0.053 | EA | 147 | 94.2 | 158.0 | 114.7 | 278 | 38.2 | 7.27 |
| 227 | " | 0.024 | 0.091 | EA | 10.3 | 83.8 | 150.7 | 110.9 | 76.4 | 15.7 | 4.86 |
| 228 | " | 0.022 | 0.084 | EA | 21.5 | 72.0 | 147.9 | 112.8 | 146 | 14.9 | 9.79 |

Table C (Part 1)
(continued)
RESULTS OF COPOLYMERIZATIONS WITH PROPYLENE ($M_2$ = Propylene)

| Run # | $M_1$ | Composition: Mole fraction $M_1$ | Composition: Wt. fraction $M_1$ | Composition: Method | Yield g/g cat | Boiling Heptane Insol. (%) | $T_m$ (°C) | $T_c$ (°C) | $\frac{M_w}{1000}$ | $\frac{M_n}{1000}$ | $\frac{M_w}{M_n}$ |
|---|---|---|---|---|---|---|---|---|---|---|---|
| 169 | 9 | <.01 | | NMR | | | | | | | |
| | | 0.015 | 0.050 | EA | 14.9 | 84.8 | 157 | 112.7 | 323 | 58.5 | 5.54 |
| 175 | " | 0.046 | 0.142 | NMR | | | | | | | |
| | | 0.049 | 0.151 | EA | 3.8 | 91.2 | 152.4 | 113.6 | * | | |
| 223 | " | 0.011 | 0.037 | EA | 52.2 | 93.1 | 154.8 | 110.6 | 177 | 16.3 | 10.8 |
| 250** | 10 | <.01 | | NMR | | | | | | | |
| | | 0.031 | 0.062 | EA | 146 | 96.2 | 162.1 | 117.7 | | | |
| 277 | 11 | 0.014 | 0.032 | EA | 114 | 96.7 | | | | | |
| 278 | " | 0.052 | 0.116 | EA | 62.4 | 93.0 | | | | | |
| 279 | | — | — | -- | 17.5 | 95.8 | | | | | |
| 280 | " | -- | — | — | 77.3 | 95.3 | | | | | |
| 241 | 12 | 0.046 | 0.062 | EA | 1.5 | -- | — | — | — | — | — |

**Incorporation of the silylated monomer was apparently very minute.

Table C (Part 2)

RESULTS OF COPOLYMERIZATIONS WITH COMONOMERS OTHER THAN PROPYLENE ($M_2$ $C_3^=$)

| Run # | $M_1$ | $M_2$ | Composition: Mole fraction $M_1$ | Composition: Wt. fraction $M_1$ | Composition: Method | Yield g/g cat or [ % ] | Boiling Heptane Insol. (%) |
|---|---|---|---|---|---|---|---|
| 274 | 5 | $C_2^=$ | .005-.024 | .017-0.082 | El.Anal. | 16 | 98.1 |
| 273 | None | " | NA | NA | NA | 11 | 94.0 |
| 233 | 9 | $C_6^=$ | 0.103 | 0.164 | El.Anal. | [28] | — |
| 281 | 11 | " | 0.369-0.426<br>0.40 | 0.410-0.494<br>0.44 | El.Anal; NMR | [57] | -- |
| 219 | None | " | NA | NA | NA | [55] | -- |
| 270 | 5 | $C_8^=$ | 0.025-0.200 | 0.022-0.182 | El.Anal. | [76] | -- |
| 269 | None | " | NA | NA | NA | [91] | -- |

Table D

| HOMOPOLYMERIZATION YIELDS | | |
|---|---|---|
| Run # | Monomer | Unoptimized Isolated Yield (%) |
| 197 | 1 | 10 |
| 214 | " | 10 |
| 159 | 2 | 22 |
| 11153 -027 | " | - |
| 11153 -022 | 3 | ~90 |
| 117 | 4 | 5 |
| 118 | " | 2 |
| 134 | " | 13 |
| 135 | " | 10 |
| 136 | " | 17 |
| 238 | 7 | - |
| 229 | 8 | 20 |
| 170 | 9 | 6 |

Table E

| COMPARISON COPOLYMERIZATIONS WITH PROPYLENE ($M_2$ = Propylene) | | | | |
|---|---|---|---|---|
| Run # | Unprotected Monomer ($M_1$) | Yield g/g cat | Mole Frac. | Wgt. Frac. |
| 310 | allylalcohol | 0 | -- | -- |
| 234 | 2-allyl phenol | 0 | -- | -- |
| 232 | allyl phenyl ether | 0 | -- | -- |
| 239 | 4-Pentenol | 0 | -- | -- |

Key for Tables

M - molar = mol/l
cmpd # - correspond to example #'s in previous section
DPMS - diphenyl dimethoxy silane

| | |
|---|---|
| $C_2^=$ - | ethylene |
| $C_3^=$ - | propylene or -$C_3$ olefin |
| $C_6^=$ - | 1-hexene or -$C_6$ olefin |
| $C_8^=$ - | octene-1 |
| $nC_7$ - | n-heptane or $C_7$ alkane (normal isomer) |
| tol - | toluene |
| $M_1$ - | comonomer #1 |
| $M_2$ - | comonomer #2 |
| $T_m$ - | melting temp. |
| $T_c$ - | crystallization temp. |
| $M_w$,$M_n$ - | weight, number average mol. weights, respectively. |
| FTI-SS - | A titanium catalyst supported on magnesium choride, available commercially from Himont Inc. |
| GF2A - | A titanium catalyst supported on magnesium choride, available commercially from Himont Inc. |
| * - | not soluble |
| DEAC - | diethyl aluminum chloride |
| PES - | phenyltriethoxy silane |
| TEA - | triethyl aluminum |
| $Et_2NSiMe_3$ - | diethylaminotrimethyl silane |

The polymers according to this invention may be homopolymers derived from the -$OSiR_3$ containing monomers, or may have a ratio of copolymerizable monomers to such monomers as high as 10,000 or higher.

## Adhesion to Metals

About 0.5 g of copolyhexenol/propene (Run #128) was placed between two pieces of aluminum foil. This sandwich was placed between the heated platens 193°C (about 380°F) of a hydraulic press. The press was closed with a few pounds of pressure for about 0.5 min. The pressure was increased to $2.1x10^3$ kg/cm (30,000 psi) for about 2.5 min at 193°C (380°F). Pressure was released; the sandwich was recovered and cooled to room temperature. The aluminum foil could not mechanically be removed from the film of copolymer except with much damage to the copolymer film. In order to remove the metal, it had to be digested away with caustic solution.

Homopolypropylene when pressed in this manner easily separated intact from the metal foil.

## Oxidation of Polymer Films

Films were made from (1) hexenol/propene copolymer (Run #128) and (2) homopolypropylene produced under conditions of Run #128 except in the absence of a comonomer. The films were made by compression of the polymer materials between Mylar sheets. While the resulting copolymer film adhered to the Mylar, it separated relatively easily after return to room temperature. These films were flexible and transparent.

The films were suspended in toluene saturated with Jones reagent (8N chromic acid - $H_2CrO_4$) at about 50°C for 16 h. They were then washed with fresh toluene. The copolymer film was slightly discolored (brownish) and was slightly less transparent than it was originally. Its flexibility and ease of tearing were unchanged by the Jones reagent. The homopolymer film was definitely more discolored (brownish). It was more translucent than transparent. But the most noticeable change was a complete loss of flexibility. It had become very brittle.

Apparently, the presence of the alcohol had an antioxidant effect at least with regards to the mechanical properties of the polymer film. It is believed that the presence of the hydroxyl groups at the ends of the short branches tends to dissipate the ability of an oxidizing agent to attack the "backbone" structure of the polymer.

IR of the polypropylene film showed three peaks in the carbonyl stretch region: about 1628 $cm^{-1}$ medium, broad; about 1720 $cm^{-1}$ medium, sharp; about 1775 weak shoulder. The most prominent feature of the carbonyl stretch region of the copolymer IR was a strong sharp band at about 1735 $cm^{-1}$. A weak broad band at about 1635 $cm^{-1}$ and two weak shoulders at about 1710 and about 1775 $cm^{-1}$ correspond to the similar bands in the polypropylene spectrum. Both spectra have bands in the O-H stretch region but the copolymer displays a stronger sharper band. Not all of the alcohol groups were oxidized as is shown by

absorption in the 1050 $cm^{-1}$ region of the copolymer IR:this is the $CH_2$-OH stretch region.

Dyeing of Polymer Powders

Hexenol/propene copolymer - Basic Red 1

To a dye bath composed of 0.18 g of Rhodamine 6G (Basic Red 1 - C.I. 45160), 6.52 g n-butanol, 57.4 g water was added, a sample of polymer resulting from Run #128 (alcohol monomer content about 5% mole) which weighed 0.56 g. The mixture was refluxed for 4 h, after which time the solid was collected by filtration and it was exhaustively sequentially washed with the following: warm water/butanol with detergent; warm water with detergent; warm water; and warm water. The solid was air dried on a frit for about 10 min and then vacuum dried overnight. A deep pink colored solid resulted.

Polypropylene - Basic Red 1

An identical treatment of a sample of a homopolypropylene was made. The polymer was made under conditions identical to Run #128 except no comonomer was used. A distinctly less colored polymer powder resulted. The pickup of any color at all was attributed to the high ash content resulting from acidic catalyst residues. In a later preparation, pre-washing the homopolymer sequentially with acidic, neutral, basic and neutral water solutions resulted in a much less intensely colored pinkish solid. Similar pre-washing of the copolymer only slightly reduced the coloration of the resulting solid. The copolymer was presumed to have been intrinsically dyed.

**Claims**

1. A method of making a stereoeregular polymer comprising polymerizing, in the presence of a Ziegler-Natta catalyst, monomers including at least one α-olefin and a silyl-containing monomer of the general formula (I)

$$[CH_2 = CH(CH_2)_a]_y(X)(0_{4\text{-}w}SiR_w)_z$$

wherein each a is independently either 0 or 1, y is an integer from 1 to 4, X is an alkyl, aryl or alkaryl group having 1 to 50 carbon atoms, z is an integer from 1 to 6, each R is independently selected from alkyl, oxyalkyl, alicyclic, aryloxy, alkaryl and aryl groups having from 1 to 20 carbon atoms, and w is an integer from 1 to 3, and the balance of the monomers is selected from α-olefins.

2. The method of claim 1 followed by the step of hydrolyzing or alcoholyzing the polymeric product.

3. The method of claim 1 wherein the polymerization is conducted in the presence of copolymerizable olefin monomers in an amount sufficient to form a copolymer having at least 0.05 mole percent of said silyl-containing monomer the balance being olefin monomers under the polymerization conditions.

4. The method of claim 1 wherein the α-olefin is ethylene.

5. The method of claim 1 wherein the α-olefin is propylene.

6. The method of claim 1 wherein the silyl-containing monomer is present in an amount from 0.5 to 25 mole percent of the monomers.

7. The method of claim 1 wherein the silyl-containing monomer is 2-propenoxy trimethyl silane.

8. The method of claim 1 wherein the silyl-containing monomer is 2-propenoxy dimethyl phenyl silane.

9. The method of claim 1 wherein the silyl-containing monomer is 2-propenoxy diphenyl methyl silane.

10. The method of claim 1 wherein the silyl-containing monomer is a compound of the formula

$$CH_2 = CH\text{-}CH_2\text{-}OSiR_3$$

wherein at least one R is an isopropyl group.

**11.** A stereoregular polymer obtainable by the method of claim 1 including as a monomer a compound of the general formula (I)

$$[CH_2 = CH(CH_2)_a]_y(X)\ (0_{4-w}SiR_w)_z \qquad (I)$$

wherein each a is independently either 0 or 1, y is an integer from 1 to 4, X is an alkyl, aryl, or alkaryl group having 1 to 50 carbon atoms, z is an integer from 1 to 6, each R is independently selected from alkyl, oxyalkyl, alicyclic, aryloxy, alkaryl and aryl groups having from 1 to 20 carbon atoms, and w is an integer from 1 to 3.

**12.** The polymer of claim 11 including a compound of the formula $CH_2 = CH(CH_2)_nOSiR_3$ as a monomer, where n is an integer from 1 to 50, and each R is independently selected from alkyl, alkaryl, oxyalkyl, alicyclic and aryl groups having from 1 to 10 carbon atoms.

**13.** The polymer of claim 11 including 2-propenoxy diphenyl methyl silane as a monomer.

**14.** The polymer of claim 11 including 2-propenoxy dimethyl phenyl silane as a monomer.

**15.** The polymer of claim 11 including 2-propenoxy trimethyl silane as a monomer.

**16.** The polymer of claim 11 including as a monomer a compound of the formula

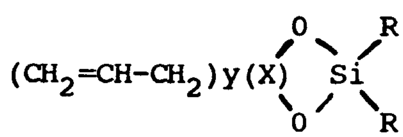

**17.** The polymer of claim 11 including as a monomer a compound of the formula

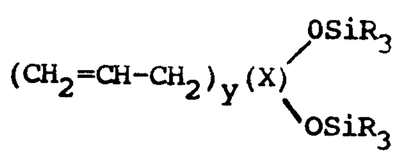

**18.** The polymer of claim 11 including as a monomer a compound of the formula

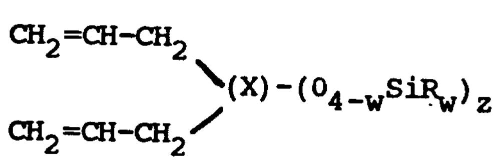

**19.** The polymer of claim 11 including as a monomer a compound of the formula

$$CH_2 = CH\text{-}CH_2(CH_2)_n\text{-}O\text{-}SiR_3$$

wherein n is an integer from 1 to 50.

**20.** The polymer of claim 19 wherein n is an integer from 1 to 20 and at least one R is an isopropyl group.

**21.** The polymer of claim 19 wherein n is an integer from 1 to 20 and at least one R is a phenyl group.

**22.** A stereoregular polymer obtainable by the method of claim 1 comprising, randomly or in blocks, groups derived from at least one α-olefin and said silyl-containing monomer, having the general formula

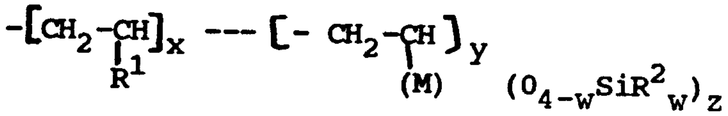

wherein x is a mole fraction of the polymer derived from α-olefins and is a number from 0 to 0.9995, y is a mole fraction of the polymer derived from silyl containing monomer and is a number from 1.0 to 0.0005, x + y is equal to 1, M is an alkyl, aryl, or alkaryl group having 1 to 50 carbon atoms, z is an integer from 1 to 6, $R^1$ is selected from hydrogen and hydrocarbon groups having 1 to 8 carbon atoms, and each $R^2$ is independently selected from alkyl, oxyalkyl, alkaryl, alicyclic and aryl groups having from 1 to 10 carbon atoms.

**23.** The polymer of claim 22 wherein $R^1$ is $CH_3$.

**24.** The polymer of claim 22 wherein $R^1$ is hydrogen.

**25.** The polymer of claim 22 wherein $R^2$ is $CH_3$ and w is 3.

**26.** The polymer of claim 22 wherein M is $CH_2$ and z is 1.

**27.** The polymer of claim 22 wherein at least one $R^2$ is a phenyl group and w is 3.

**28.** The polymer of claim 22 wherein M is $CH_2$, z is 1, w is 3 and each $R^1$ is hydrogen.

**29.** The polymer of claim 22 wherein M is $CH_2$, z is 1, w is 3 and each $R^1$ is $CH_3$.

**30.** The polymer of claim 22 wherein x is a number from 0.95 to 0.99 and y is a number from 0.01 to 0.05.

**31.** The polymer of claim 22 made by copolymerizing an α-olefin having from 2 to 10 carbon atoms with monomers of the formula

$CH_2 = CH(M)(0_{4-w}SiR^2{}_w)_z$

in the presence of a Ziegler-Natta catalyst.

**32.** The polymer of claim 12 consisting essentially of units derived from monomers of the formula

$CH_2 = CH\text{-}CH_2\text{-}OSiR_3$

wherein each R is independently selected from alkyl, alicyclic, oxyalkyl, alkaryl and aryl groups having from 1 to 20 carbon atoms.

**33.** A stereoregular polymer obtainable by the method of claim 2 and having the general formula

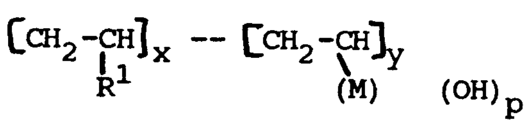

wherein the units subtended by x and y represent randomly or sequentially repeating groups, M is an alkyl, aryl or alkaryl group having from 1 to 50 carbon atoms, p is an integer from 1 to 4, $R^1$ is selected from hydrogen and hydrocarbon groups having from 1 to 6 carbon atoms, x represents mole percent and is a number from 0 to 99.95 and y representy mole percent and is a number from 100 to 0.05.

**34.** The polymer of claim 33 wherein $R^1$ is $CH_3$.

**35.** The polymer of claim 33 wherein $R^1$ is $CH_3$ and p is 1.

**36.** The polymer of claim 33 wherein $R^1$ is hydrogen.

**37.** The polymer of claim 33 wherein each $R^1$ is independently selected from hydrogen and $CH_3$.

**38.** The polymer of claim 33 wherein M is $(CH_2)n$, p is 1 and n is an integer from 1 to 50.

**39.** The polymer of claim 33 made by hydrolyzing or alcoholyzing a polymer of claim 22.

**40.** The polymer of claim 33 being a substantially stereoregular copolymer of propylene and 0.5 to 25 mole percent units comprising at least one pendant carbon atom having a hydroxyl substitution.

**41.** Use of a polymer of claim 33 for making a colored polypropylene comprising reacting a dye with a polymer of claim 33 wherein $R^1$ is $CH_3$, and the OH containing units comprise from 0.05 mole percent to 10 mole percent of the polymer.

**42.** Use of a polymer of claim 33 for making a physical mixture of the polymer and nylon.

**43.** Use of a polymer of claim 33 for making a structure comprising a substrate and, adhering thereto, a film of said polymer.

**44.** Use of a polymer of claim 33 for making a laminate comprising a metallic substrate and, adhering thereto, a film of said polymer.

**45.** Use of a polymer of claim 33 for making a laminate composite comprising a layer including said polymer and a solid substrate on each side thereof.

## Patentansprüche

**1.** Verfahren zur Herstellung eines stereoregulären Polymers, welches in Anwesenheit eines Ziegler-Natta-Katalysators das Polymerisieren von Monomeren umfaßt, die mindestens ein $\alpha$-Olefin und ein silylhaltiges Monomer der allgemeinen Formel (I)

$$[CH_2=CH(CH_2)_a]_y(X)(O_{4-w}SiR_w)_z$$

umfassen, worin a jeweils unabhängig entweder 0 oder 1 ist, y eine ganze Zahl von 1 bis 4 ist, X eine Alkyl-, Aryloder Alkarylgruppe mit 1 bis 50 Kohlenstoffatomen ist, z eine ganze Zahl von 1 bis 6 ist, R jeweils unabhängig ausgewählt ist aus Alkyl-, Oxyalkyl-, alicyclischen, Aryloxy-, Alkaryl- und Arylgruppen mit 1 bis 20 Kohlenstoffatomen und w eine ganze Zahl von 1 bis 3 ist und der Rest der Monomere aus $\alpha$-Olefinen ausgewählt ist.

**2.** Verfahren nach Anspruch 1, auf das die Stufe des Hydrolysierens und Alkoholisierens des polymeren Produkts folgt.

**3.** Verfahren nach Anspruch 1, worin die Polymerisation in Anwesenheit copolymerisierbarer Olefinmonomere in einer Menge, die ausreicht, um ein Copolymer mit mindestens 0,05 Mol% des silylhaltigen Monomers zu bilden, wobei der Rest Olefinmonomere sind, unter den Polymerisationsbedingungen durchgeführt wird.

**4.** Verfahren nach Anspruch 1, worin das $\alpha$-Olefin Ethylen ist.

**5.** Verfahren nach Anspruch 1, worin das $\alpha$-Olefin Propylen ist.

**6.** Verfahren nach Anspruch 1, worin das silylhaltige Monomer in einer Menge von 0,5 bis 25 Mol% der Monomere anwesend ist.

**7.** Verfahren nach Anspruch 1, worin das silylhaltige Monomer 2-Propenoxytrimethylsilan ist.

**8.** Verfahren nach Anspruch 1, worin das silylhaltige Monomer 2-Propenoxydimethylphenylsilan ist.

**9.** Verfahren nach Anspruch 1, worin das silylhaltige Monomer 2-Propenoxydiphenylmethylsilan ist.

**10.** Verfahren nach Anspruch 1, worin das silylhaltige Monomer eine Verbindung der Formel

$CH_2 = CH\text{-}CH_2\text{-}OSiR_3$

ist, worin wenigstens ein R eine Isopropylgruppe ist.

**11.** Stereoreguläres Polymer, erhältlich durch das Verfahren nach Anspruch 1, welches als Monomer eine Verbindung der allgemeinen Formel (I)

$[CH_2 = CH(CH_2)_a]_y(X)\ (O_{4\text{-}w}SiR_w)_z$ (I)

enthält, worin a jeweils unabhängig entweder 0 oder 1 ist, y eine ganze Zahl von 1 bis 4 ist, X eine Alkyl-, Aryl- oder Alkarylgruppe mit 1 bis 50 Kohlenstoffatomen ist, z eine ganze Zahl von 1 bis 6 ist, R jeweils unabhängig ausgewählt ist aus Alkyl-, Oxyalkyl-, alicyclischen, Aryloxy-, Alkaryl- und Arylgruppen mit 1 bis 20 Kohlenstoffatomen und w eine ganze Zahl von 1 bis 3 ist.

**12.** Polymer nach Anspruch 11, das eine Verbindung der Formel $CH_2 = CH(CH_2)_nOSiR_3$ als Monomer enthält, worin n eine ganze Zahl von 1 bis 50 ist und R jeweils unabhängig ausgewählt ist aus Alkyl-, Alkaryl-, Oxyalkyl-, alicyclischen und Arylgruppen mit 1 bis 10 Kohlenstoffatomen.

**13.** Polymer nach Anspruch 11, umfassend 2-Propenoxydiphenylmethylsilan als ein Monomer.

**14.** Polymer nach Anspruch 11, umfassend 2-Propenoxydimethylphenylsilan als ein Monomer.

**15.** Polymer nach Anspruch 11, umfassend 2-Propenoxytrimethylsilan als ein Monomer.

**16.** Polymer nach Anspruch 11, umfassend als ein Monomer eine Verbindung der Formel

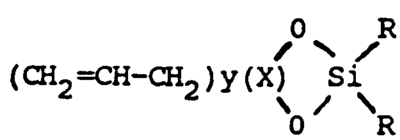

**17.** Polymer nach Anspruch 11, umfassend als ein Monomer eine Verbindung der Formel

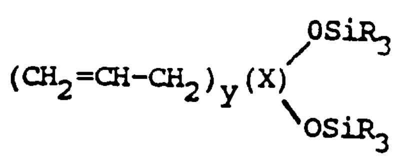

**18.** Polymer nach Anspruch 11, umfassend als ein Monomer eine Verbindung der Formel

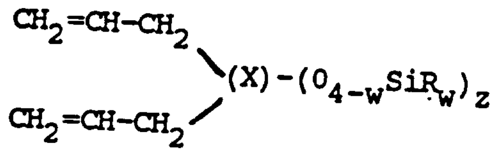

**19.** Polymer nach Anspruch 11, umfassend als ein Monomer eine Verbindung der Formel

$CH_2 = CH\text{-}CH_2(CH_2)_n\text{-}O\text{-}SiR_3$

worin n eine ganze Zahl von 1 bis 50 ist.

**20.** Polymer nach Anspruch 19, worin n eine ganze Zahl von 1 bis 20 ist und wenigstens ein R eine Isopropylgruppe ist.

**21.** Polymer nach Anspruch 19, worin n eine ganze Zahl von 1 bis 20 und wenigstens ein R eine Phenylgruppe ist.

**22.** Stereoreguläres Polymer, erhältlich durch das Verfahren nach Anspruch 1, welches statistisch oder in Blöcken Gruppen umfaßt, die abgeleitet sind von wenigstens einem α-Olefin und dem silylhaltigen Monomer, mit der allgemeinen Formel

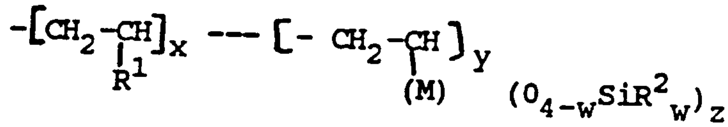

worin x ein Stoffmengenanteil des von α-Olefinen abgeleiteten Polymers und eine Zahl von 0 bis 0,9995 ist, y ein Stoffmengenanteil des von dem silylhaltigen Monomer abgeleiteten Polymers und eine Zahl von 1,0 bis 0,0005 ist, x + y 1 ist, M eine Alkyl-, Aryl- oder Alkarylgruppe mit 1 bis 50 Kohlenstoffatomen ist, z eine ganze Zahl von 1 bis 6 ist, $R^1$ ausgewählt ist aus Wasserstoff und Kohlenwasserstoffgruppen mit 1 bis 8 Kohlenstoffatomen und $R^2$ jeweils unabhängig ausgewählt ist aus Alkyl-, Oxyalkyl-, Alkaryl-, alicyclischen und Arylgruppen mit 1 bis 10 Kohlenstoffatomen.

**23.** Polymer nach Anspruch 22, worin $R^1$ $CH_3$ ist.

**24.** Polymer nach Anspruch 22, worin $R^1$ Wasserstoff ist.

**25.** Polymer nach Anspruch 22, worin $R^2$ $CH_3$ ist und w 3 ist.

**26.** Polymer nach Anspruch 22, worin M $CH_2$ ist und z 1 ist.

**27.** Polymer nach Anspruch 22, worin wenigstens ein $R^2$ eine Phenylgruppe ist und w 3 ist.

**28.** Polymer nach Anspruch 22, worin M $CH_2$ ist, z 1 ist, w 3 ist und jedes $R^1$ Wasserstoff ist.

**29.** Polymer nach Anspruch 22, worin M $CH_2$ ist, z 1 ist, w 3 ist und jedes $R^1$ $CH_3$ ist.

**30.** Polymer nach Anspruch 22, worin x eine Zahl von 0,95 bis 0,99 und y eine Zahl von 0,01 bis 0,05 ist.

**31.** Polymer nach Anspruch 22, hergestellt durch Copolymerisieren eines α-Olefins mit 2 bis 10 Kohlenstoffatomen mit Monomeren der Formel

$CH_2 = CH(M)(O_{4-w}SiR^2{}_w)_w$

in Anwesenheit eines Ziegler-Natta-Katalysators.

**32.** Polymer nach Anspruch 12, das im wesentlichen aus Struktureinheiten besteht, die abgeleitet sind von Monomeren der Formel

$CH_2 = CH\text{-}CH_2\text{-}OSiR_3$

worin R jeweils unabhängig ausgewählt ist aus Alkyl-, alicyclischen, Oxyalkyl, Alkaryl- und Arylgruppen mit 1 bis 20 Kohlenstoffatomen.

**33.** Stereoreguläres Polymer, erhältlich durch das Verfahren nach Anspruch 2 und mit der allgemeinen Formel

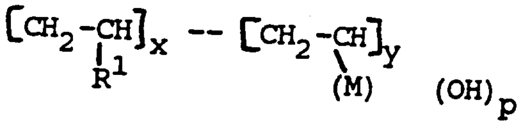

worin die Einheiten, die mit x und y bezeichnet sind, sich statistisch oder sequentiell wiederholende Gruppen sind, M eine Alkyl-, Aryl- oder Alkarylgruppe mit 1 bis 50 Kohlenstoffatomen ist, p eine ganze Zahl von 1 bis 4 ist, $R^1$ ausgewählt ist aus Wasserstoff und Kohlenwasserstoffgruppen mit 1 bis 6 Kohlenstoffatomen, x Mol% darstellt und eine Zahl von 0 bis 99,95 ist und y Mol% darstellt und eine Zahl von 100 bis 0,05 ist.

**34.** Polymer nach Anspruch 33, worin $R^1$ $CH_3$ ist.

**35.** Polymer nach Anspruch 33, worin $R^1$ $CH_3$ ist und p 1 ist.

**36.** Polymer nach Anspruch 33, worin $R^1$ Wasserstoff ist.

**37.** Polymer nach Anspruch 33, worin $R^1$ jeweils unabhängig ausgewählt ist aus Wasserstoff und $CH_3$.

**38.** Polymer nach Anspruch 33, worin M $(CH_2)_n$ ist, p 1 ist und n eine ganze Zahl von 1 bis 50 ist.

**39.** Polymer nach Anspruch 33, hergestellt durch Hydrolysieren und Alkoholisieren eines Polymers nach Anspruch 22.

**40.** Polymer nach Anspruch 33, das ein im wesentlichen stereoreguläres copolymer von Propylen und von 0,5 bis 25 Mol% Struktureinheiten, die wenigstens ein Hydroxyl-substituiertes anhängendes Kohlenstoffatom umfassen, ist.

**41.** Verwendung eines Polymers nach Anspruch 33 zum Herstellen eines farbigen Polypropylens, das das Reagieren eines Farbstoffes mit einem Polymer nach Anspruch 33 umfaßt, worin $R^1$ $CH_3$ ist und die OH-haltigen Struktureinheiten 0,05 Mol% bis 10 Mol% des Polymers umfassen.

**42.** Verwendung eines Polymers nach Anspruch 33 zum Herstellen eines physikalischen Gemisches aus dem Polymer und Nylon.

**43.** Verwendung eines Polymers nach Anspruch 33 zum Herstellen eines Aufbaus, der ein Substrat und einen daran haftenden Film aus dem Polymer umfaßt.

**44.** Verwendung eines Polymers nach Anspruch 33 zum Herstellen eines Laminats, das ein metallisches Substrat und einen daran haftenden Film aus dem Polymer umfaßt.

**45.** Verwendung eines Polymers nach Anspruch 33 zum Herstellen eines Laminats, das auf jeder Seite eine Schicht umfaßt, die das Polymer und ein festes Substrat enthält.

**Revendications**

**1.** Procédé de préparation d'un polymère stéréorégulier comprenant la polymérisation, en présence d'un catalyseur de Ziegler-Natta, de monomères comportant au moins une α-oléfine et un monomère, contenant un groupe silyle répondant à la formule générale (I)

$[CH_2 = CH(CH_2)a]y(X)(O_{4-w}SiR_w)_z$ (I)

dans laquelle chaque a, indépendamment, vaut 0 ou 1 ; y est un nombre entier valant 1 à 4; X représente un groupe alkyle, aryle ou alcaryle ayant 1 à 50 atomes de carbone ; z est un nombre entier valant 1 à 6 ; chaque R est choisi, indépendamment, parmi un groupe alkyle, oxyalkyle, alicyclique, aryloxy, alcaryle et aryle ayant 1 à 20 atomes de carbone et w est un nombre entier valant 1 à 3, le reste des monomères étant choisi parmi des α-oléfines.

**2.** Procédé selon la revendication 1, suivi par l'étape consistant à hydrolyser ou à alcooliser le produit polymère.

**3.** Procédé selon la revendication 1, dans lequel la polymérisation est conduite en présence de monomères oléfiniques copolymérisables, présents en une quantité suffisante pour former un copolymère comportant au moins 0,05 mol% dudit monomère contenant des groupes silyles, le reste étant constitué par des monomères oléflniques dans les conditions de la polymérisation.

**4.** Procédé selon la revendication 1, dans lequel l'α-oléflne est l'éthylène.

**5.** Procédé selon la revendication 1, dans lequel l'α-oléfine est le propylène.

**6.** Procédé selon la revendication 1, dans lequel le monomère contenant des groupes silyles est présent en une quantité de 0,5 à 25 mol% des monomères.

**7.** Procédé selon la revendication 1, dans lequel le monomère contenant des groupes silyles est le 2-propénoxy-triméthyl-silane.

**8.** Procédé selon la revendication 1, dans lequel le monomère contenant des groupes silyles est le 2-propénoxy-diméthyl-phényl-silane.

**9.** Procédé selon la revendication 1, dans lequel le monomère contenant des groupes silyles et le 2-propénoxy-diphényl-méthyl-silane.

**10.** Procédé selon la revendication 1, dans lequel le monomère contenant un ou des groupes silyles est un composé de formule:

$CH_2 = CH\text{-}CH_2\text{-}OSiR_3$

dans laquelle au moins un R représente un groupe isopropyle.

**11.** Polymère stéréorégulier, que l'on peut obtenir par le procédé de la revendication 1, comprenant comme monomère un composé de formule générale (I):

$[CH_2 = CH(CH_2)_a]_y(X)(O_{4-w}SiR_w)_z$ (I)

dans laquelle chaque a vaut indépendamment 0 ou 1; y est un nombre entier valant 1 à 4 ; x représente un groupe alkyle, aryle ou alcaryle ayant 1 à 50 atomes de carbone; z est un nombre entier valant 1 à 6 ; chaque R est choisi, indépendamment, parmi un groupe alkyle, oxyalkyle, alicyclique, aryloxy, alcaryle et aryle ayant 1 à 20 atomes de carbone ; et w est un nombre entier valant 1 à 3.

**12.** Polymère selon la revendication 11, comprenant un composé de formule : $CH_2=CH(CH_2)_nOSiR_3$ comme monomère, formule dans laquelle n est un nombre entier valant 1 à 50, et chaque R est choisi indépendamment parmi un groupe alkyle, alcaryle, oxyalkyle, alicyclique et aryle ayant 1 à 10 atomes de carbone.

**13.** Polymère selon la revendication 11, comprenant du 2-propénoxydiphényl-méthyl-silane comme monomère.

**14.** Polymère selon la revendication 11, comprenant du 2-propénoxydiméthyl-phényl-silane comme monomère.

**15.** Polymère selon la revendication 11, comprenant du 2-propénoxytriméthyl-silane comme monomère.

**16.** Polymère selon la revendication 11, comprenant à titre de monomère, un composé de formule:

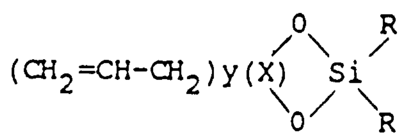

**17.** Polymère selon la revendication 11, comprenant, comme monomère, un composé de formule:

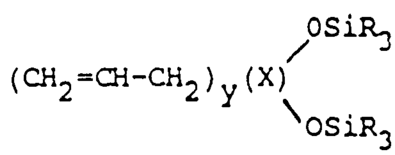

**18.** Polymère selon la revendication 11, comprenant, comme monomère, un composé de formule:

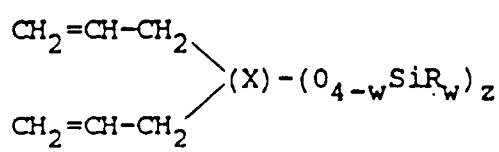

**19.** Polymère selon la revendication 11, comprenant, à titre de monomère, un composé de formule:

$CH_2=CH\text{-}CH_2(CH_2)_n\text{-}O\text{-}SiR_3$

dans laquelle n est un nombre entier valant 1 à 50.

**20.** Polymère selon la revendication 19, dans lequel n est un nombre entier valant 1 à 20 et au moins l'un des symboles R représente un groupe isopropyle.

**21.** Polymère selon la revendication 19, dans lequel n est un nombre entier valant 1 à 20 et au moins un symbole R représente un groupe phényle.

**22.** Polymère stéréorégulier, que l'on peut obtenir par le procédé de la revendication 1, comprenant, de manière aléatoire ou sous forme de blocs ou longues séquences, des groupes dérivés d'au moins une $\alpha$-oléfine et dudit monomère contenant au moins un groupe silyle, ce polymère répondant à la formule générale

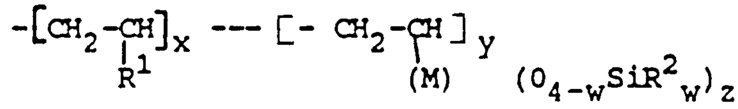

dans laquelle x est une fraction molaire du polymère provenant d'α-oléfines et est un nombre valant de 0 à 0,9995, y est une fraction molaire du polymère provenant du monomère contenant au moins un groupe silyle et est un nombre valant de 1,0 à 0,0005, la somme (x + y) est égale à 1; M représente un groupe alkyle, aryle ou alcaryle ayant 1 à 50 atomes de carbone ; z est un nombre entier valant 1 à 6 ; $R^1$ est choisi parmi un atome d'hydrogène et des groupes hydrocarbonés ayant 1 à 8 atomes de carbone ; et chaque $R^2$ est choisi, indépendamment, parmi un groupe alkyle, oxyalkyle, alcaryle, alicyclique et aryle ayant 1 à 10 atomes de carbone.

**23.** Polymère selon la revendication 22, dans lequel $R^1$ représente $CH_3$.

**24.** Polymère selon la revendication 22, dans lequel $R^1$ représente un atome d'hydrogène.

**25.** Polymère selon la revendication 22, dans lequel $R^2$ représente $CH_3$, et w vaut 3.

**26.** Polymère selon la revendication 22, dans lequel M représente $CH_2$ et z vaut 1.

**27.** Polymère selon la revendication 22, dans lequel au moins l'un des symboles $R^2$ représente un groupe phényle, et w vaut 3.

**28.** Polymère selon la revendication 22, dans lequel M représente $CH_2$, z vaut 1, w vaut 3 et chaque $R^1$ représente un atome d'hydrogène.

**29.** Polymère selon la revendication 22, dans lequel M représente $CH_2$, Z vaut 1, w vaut 3 et chaque $R^1$ représente un groupe $CH_3$.

**30.** Polymère selon la revendication 22, dans lequel x est un nombre valant de 0,095 à 0,99 et y est un nombre valant de 0,01 à 0,05.

**31.** Polymère selon la revendication 22, produit par copolymérisation d'une α-oléfine, ayant de 2 à 10 atomes de carbone, avec des monomères de formule:

$CH_2 = CH(M)(O_{4-w}SiR^2_w)_z$

en présence d'un catalyseur de Ziegler-Natta.

**32.** Polymère selon la revendication 12, consistant essentiellement en des motifs dérivant de monomères de formule:

$CH_2 = CH\text{-}CH_2\text{-}OSiR_3$

dans laquelle chaque R est choisi, indépendamment, parmi un groupe alkyle, alicyclique, oxyalkyle, alcaryle et aryle ayant de 1 à 20 atomes de carbone.

**33.** Polymère stéréorégulier, que l'on peut obtenir par le procédé de la revendication 2 et qui a pour formule générale:

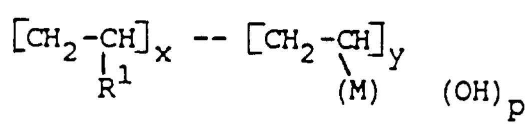

dans laquelle les motifs associés à x et y représentent des groupes répétés au hasard ou en longues séquences, M représente un groupe alkyle, aryle ou alcaryle ayant de 1 à 50 atomes de carbone; p est un nombre entier valant 1 à 4; $R^1$ est choisi parmi un atome d'hydrogène et des groupes hydrocarbonés ayant 1 à 6 atomes de carbone; x représente le pourcentage molaire et est un nombre valant de 0 à 99,95 et y représente un pourcentage molaire est un nombre valant de 100 à 0,05.

**34.** Polymère selon la revendication 33, dans lequel $R^1$ représente $CH_3$.

**35.** Polymère selon la revendication 33, dans lequel $R^1$ représente $CH_3$ et p vaut 1.

**36.** Polymère selon la revendication 33, dans lequel $R^1$ représente un atome d'hydrogène.

**37.** Polymère selon la revendication 33, dans lequel chaque $R^1$ est choisi, indépendamment, parmi un atome d'hydrogène et un groupe $CH_3$.

**38.** Polymère selon la revendication 33, dans lequel M représente $(CH_2)_n$ ; p vaut 1 et n est un nombre entier valant 1 à 50.

**39.** Polymère selon la revendication 33, obtenu par hydrolyse ou alcoolyse d'un polymère selon la revendication 22.

**40.** Polymère selon la revendication 33, qui est un copolymère essentiellement stéréorégulier du propylène et de 0,5 à 25 mol% de motifs comprenant au moins un atome de carbone pendant ou latéral portant un groupe hydroxyle comme substituant.

**41.** Utilisation d'un polymère selon la revendication 33, pour produire un polypropylène coloré, comprenant la réaction d'un colorant avec un polymère selon la revendication 33, dans lequel $R^1$ représente $CH_3$ et les motifs contenant des groupes OH constituent de 0,05 mol% à 10 mol% du polymère.

**42.** Utilisation d'un polymère selon la revendication 33, pour produire un mélange physique du polymère et de "Nylon".

**43.** Utilisation d'un polymère selon la revendication 33, pour produire une structure comprenant un substrat auquel adhère une pellicule dudit polymère.

**44.** Utilisation d'un polymère selon la revendication 33, pour produire un stratifié comprenant un substrat métallique et une pellicule dudit polymère qui adhère à ce substrat.

**45.** Utilisation d'un polymère selon la revendication 33, pour produire un stratifié composite comprenant une couche englobant ledit polymère et un substrat solide de chaque côté de cette couche.